# EUROPÄISCHE PATENTSCHRIFT

(11) **EP 3 909 837 B1**
(45) Veröffentlichungstag und Bekanntmachung des Hinweises auf die Patenterteilung: **24.12.2025**
(21) Anmeldenummer: 21167208.4
(22) Anmeldetag: 07.04.2021
(51) Int. Cl.: B62K 19/46, B62K 7/04, B62J 9/20

(54) **LASTENFAHRRADBEHÄLTER**
DELIVERY BICYCLE CONTAINER
RÉCEPTACLE DE BICYCLETTE DE TRANSPORT

(30) Priorität: 09.04.2020 DE 202020101999 U
(43) Veröffentlichungstag der Anmeldung: 17.11.2021
(73) Patentinhaber: RTI Sports GmbH, 56070 Koblenz (DE)
(72) Erfinder: RASCHE, Johannes, 64285 Darmstadt (DE); GRAEVE, Arndt, 56072 Koblenz (DE)
(74) Vertreter: dompatent

(56) Entgegenhaltungen:
- EP-A2- 2 433 854
- CA-A1- 2 320 649
- HEAVY PEDALS: "https://twitter.com/heavypedals/status/678894314668335104", 21 December 2015 (2015-12-21), pages 1 - 1, XP055822435, Retrieved from the Internet <URL:https://twitter.com/heavypedals/status/678894314668335104> [retrieved on 20210708]
- ANONYMOUS: "Centaur Cargo Bike | Centaur Cargo", 30 June 2019 (2019-06-30), pages 1 - 5, XP055820732, Retrieved from the Internet <URL:https://web.archive.org/web/20190630185359/https://www.centaurcargo.com/en/cargo-bikes/centaur-cargo-bike/> [retrieved on 20210702]

## Beschreibung

Die Erfindung betrifft einen Lastenfahrradbehälter.

Lastenfahrradbehälter dienen zum Transport von Personen wie Kindern und insbesondere auch zum Transport von Gütern.

Bei derartigen Lastenfahrradbehältern handelt es sich häufig um einfache Holzboxen. Zum Transport von Gütern ist es bekannt, die Box mit einer Plane zu überspannen oder einen Deckel vorzusehen. Dies ist auch zweckmäßig, um beispielsweise bei im Freien abgestellten Lastenfahrrädern das Eindringen von Regenwasser und dergleichen zu vermeiden. Ferner kann ein insbesondere verschließbarer Deckel vor unbefugtem Zugriff, beispielsweise von verstauten Einkäufen oder dergleichen, dienen. Bei bekannten Lastenfahrradbehältern mit einem Deckel besteht die Problematik, dass beim Vorsehen von Scharnieren die Deckel häufig nur teilweise geöffnet werden können. Störend ist hierbei beispielsweise der zumindest teilweise im hinteren Bereich oberhalb des Lastenfahrradbehältern angeordnete Lenker. Des Weiteren besteht bei bekannten Lastenfahrradbehältern mit Deckeln das Problem, dass es sich hierbei häufig um schwere Bauteile handelt und diese beispielsweise bei einem leichten Windstoß selbständig zuklappen. Ein Halten des Deckels in geöffnetem Zustand erfolgt über zusätzliche Elemente wie Stangen, Haltebänder oder dergleichen.

Ein Transportbehälter für Briefe zur Postverteilung ist aus EP 2 433 854 bekannt. Ein derartiger Behälter kann auf einem Fahrrad angeordnet werden. Der Behälter weist ein Behälterelement zur Aufnahme der Briefe sowie ein Deckelelement auf. Das Deckelelement ist über zwei Scharnierelemente mit den beiden Seitenwänden des Behälterelements verbunden. Beim Öffnen des Deckelelements wird dieses neben das Behälterelement verschwenkt. Dies ist insbesondere aus Bauraumgründen nachteilig. Ferner treten erhebliche mechanische Belastungen, insbesondere an den Scharnierelementen auf.

Aufgabe der Erfindung ist es, einen Lastenfahrradbehälter mit einem Deckelelement zu schaffen, das einfach zu öffnen und zu schließen ist.

Die Lösung der Aufgabe erfolgt erfindungsgemäß durch einen Lastenfahrradbehälter mit den Merkmalen des Anspruchs 1.

Der erfindungsgemäße Lastenfahrradbehälter weist ein Behälterelement auf. Dieses weist ein Bodenelement, eine Rückwand, eine Vorderwand und zwei einander gegenüberliegende Seitenwände auf. Ferner ist ein Deckelelement vorgesehen, das das Behälterelement insbesondere vollständig verschließt. Erfindungsgemäß ist das Deckelelement über zwei Scharnierelemente mit dem Behälterelement verbunden. Hierbei ist jeweils ein Scharnierelement mit dem Deckelelement und einer der beiden Seitenwände mittelbar oder unmittelbar verbunden. Hierbei kann eine Verbindung mit der Seitenwand beispielsweise über ein Zwischenelement erfolgen. Ebenso kann eine insbesondere mittelbare Verbindung über ein Bauteil erfolgen, das die Seitenwand trägt. Hierbei kann es sich um einen Rahmen, ein Versteifungselement oder dergleichen handeln. In Fahrtrichtung sind die beiden Scharnierelemente somit zwischen dem Deckelelement und der linken und rechten Seitenwand angeordnet. Es erfolgt somit ein Öffnen des Deckelelements in Fahrtrichtung oder entgegen der Fahrtrichtung bzw. in Richtung des Lenkers oder vom Lenker weg. Gegenüber einer Öffnung zur Seite weist dies den erheblichen Vorteil auf, dass hierdurch die Standfestigkeit des Lastenfahrrads auf bei geöffnetem Deckelelement gewährleistet bleibt. Hierdurch ist auch das Öffnen und Schließen auf einfache Weise möglich. Des Weiteren besteht der Vorteil, dass der Lastenfahrradbehälter von drei Seiten auf einfache Weise gut zugänglich ist. Der Deckel befindet sich im geöffneten Zustand in Fahrtrichtung vor dem Lenker. Von dieser Richtung ist ein Zugang zu dem Stauraum aufgrund des Lenkers ohnehin schlecht möglich. Erfindungsgemäß sind die zwei Scharnierelemente derart ausgebildet, dass beim Öffnen sowie auch beim Schließen des Deckelelements eine rotatorische und translatorische Bewegung des Deckelelements gegenüber dem Behälterelement erfolgt. Hierdurch ist es möglich, das Deckelelement derart zu bewegen, dass es in geöffnetem Zustand oberhalb der Öffnung des Behälterelements angeordnet ist. Es ist somit kein Raumbedarf seitlich neben dem Behälterelement erforderlich. Auch sind die auf die Scharnierelemente wirkenden Kräfte bei dieser Bewegung geringer.

Erfolgt ein Öffnen des Deckelelements beispielsweise im Bereich einer Rückwand bzw. Rückseite des Behälterelements, so bewegt sich beim Öffnen des Deckelelements eine Kante des Deckelelements, die in geschlossenem Zustand im Bereich der Rückwand angeordnet ist, nach innen in Richtung der Öffnung des Behälterelements. Insbesondere bewegt sich diese rückseitige Kante des Deckelelements in Richtung der Bereiche, in denen die beiden Scharnierelemente am Behälterelement befestigt sind. Es erfolgt somit kein Schwenken des Deckelelements um ein zwischen der Rückwand des Behälterelements und der rückwärtigen Kante des Deckelelements angeordnetes Scharnier oder Gelenk. Das geöffnete Deckelelement befindet sich in geöffnetem Zustand somit oberhalb der Rückwand, insbesondere auf der Innenseite der Rückwand bzw. auf derjenigen Seite der Rückwand, die in Richtung des Behälterinneren weist. Gleichzeitig befindet sich das Deckelement oberhalb der Öffnung des Behälterelements.

Vorzugsweise weisen die beiden Scharnierelemente jeweils ein Deckelbefestigungselement und ein Wandbefestigungselement auf. Die beiden Befestigungselemente sind hierbei jeweils in einem Abstand zur Rückwand des Behälterelements bzw. in einem Abstand zur Rückseite des Deckelelements angeordnet. Die Rückseite des Deckelelements ist derjenige Bereich, der bei geschlossenem Deckelelement oberhalb der Rückwand des Behälterelements angeordnet ist. Dies hat gegenüber einem Scharnier, das zwischen der Rückwand des Behälterelements und der Rückseite des Deckelelements angeordnet ist, den erheblichen Vorteil, dass die Schwenkachse nicht nahe des Lenkers bzw. des mit dem Lenker verbundenen Lenkerrohrs angeordnet ist. Eine Kollision mit dem Lenker beim Öffnen und somit ein ggf. nicht vollständiges Öffnen ist somit vermieden. Vielmehr kann aufgrund dieses Abstands das Deckelelement derart geöffnet werden, dass es vollständig geöffnet werden kann, selbst wenn der Lenker oberhalb des Lastenfahrradbehälters angeordnet ist.

Zwischen dem Deckelbefestigungselement und dem Wandbefestigungselement ist jeweils mindestens ein Scharnierhebel vorgesehen ist. Der Scharnierhebel ist hierbei sowohl mit dem Deckelbefestigungselement als auch mit dem Wandbefestigungselement schwenkbar verbunden. Dies erfolgt insbesondere über Schwenkachsen. Durch Anordnen zweier Schwenkachsen, die ferner in einem Abstand zur Rückwand des Behälterelements bzw. zur Rückseite des Deckelelements vorgesehen sind, ist eine Kollision des Deckelelements mit dem Lenker beim Öffnen vermieden, so dass insbesondere ein vollständiges Öffnen des Deckelelements möglich ist. In vollständig geöffnetem Zustand ist das Deckelelement im Wesentlichen vertikal angeordnet.

In einer besonders bevorzugten Weiterbildung der Erfindung weisen die Scharnierelemente jeweils einen zweiten Scharnierhebel auf. Vorzugsweise ist der zweite Scharnierhebel kürzer als der erste Scharnierhebel. Der zweite Scharnierhebel ist entsprechend dem ersten Scharnierhebel vorzugsweise jeweils über eine Schwenkachse mit dem Deckelbefestigungselement und dem Wandbefestigungselement verbunden. Ebenso ist es möglich, dass der zweite Scharnierhebel mit dem Deckelbefestigungselement oder dem Wandbefestigungselement verbunden ist und das zweite Ende des zweiten Scharnierhebels mit dem ersten Scharnierhebel verbunden ist. Besonders bevorzugt ist es ferner, dass der zweite Scharnierhebel zwischen dem ersten Scharnierhebel und der Rückwand des Behälterelements bzw. der Rückseite des Deckelelements angeordnet ist.

In einer besonders bevorzugten erfindungsgemäßen Ausführungsform sind beide Scharnierhebel jeweils über Schwenkachsen sowohl mit dem Deckelelement als auch mit dem Behälterelement verbunden. Jeder Scharnierhebel weist somit zwei Schwenkachsen auf. Die Schwenkachsen sind vorzugsweise horizontal angeordnet und/oder verlaufen parallel zueinander. Die Schwenkachsen der beiden Schwenkhebel je Schwenkelement sind in einem Abstand zueinander angeordnet. Der Abstand der Schwenkachsen, die an dem Behälterelement angeordnet sind, ist vorzugsweise größer als der Abstand der Schwenkachsen, die an dem Deckelelement angeordnet sind.

Des Weiteren ist es bevorzugt, dass sich die Hebellängen der beiden Schwenkhebel je Scharnierelement unterscheiden. Ggf. können die Hebel auch einfach oder mehrfach abgewinkelt sein. Der Abstand zwischen den beiden Schwenkachsen des einen Hebelelements unterscheidet sich hierbei vom Abstand der beiden Schwenkachsen des anderen Hebelelements. Insbesondere ist der Abstand der Schwenkachsen eines weiter innen liegenden Hebelelements größer als der Abstand der Schwenkachsen eines weiter außen liegenden Hebelelements, wobei das weiter außen liegende Hebelelement näher an der Rückwand oder Seitenwand des Behälterelements liegt, um die das Verschwenken des Deckelelements erfolgt.

Des Weiteren ist es bevorzugt, dass sich die beiden Scharnierhebel eines Scharnierelements beim Öffnen sowie auch beim Schließen in die gleiche Richtung bewegen. Die Drehbewegung der beiden Scharnierhebel ist somit stets gleichförmig.

In einer weiteren besonders bevorzugten Ausführungsform der Scharnierelemente ist insbesondere bei beiden Scharnierelementen zwischen den beiden Scharnierhebeln ein Federelement angeordnet. Dies führt insbesondere dazu, dass die bevorzugte Bewegung des Deckelelements realisiert ist, bei der das Deckelelement, wie nachstehend detaillierter beschrieben, insbesondere beim Öffnen zunächst vertikal angehoben und dann verschwenkt wird. Beim Schließen erfolgt hierbei vorzugsweise zunächst ein Verschwenken und dann ein vertikales Absenken.

Der Abstand zwischen der Rückseite des Deckelelements und dem Deckelbefestigungselement und/oder zwischen der Rückwand des Behälterelements und dem Wandbefestigungselement beträgt mindestens ein Sechstel, insbesondere mindestens ein Viertel und besonders bevorzugt mindestens ein Drittel der Länge des Deckelelements bzw. der Seitenwand. Bei der entsprechenden Länge handelt es sich um die Außenabmessungen des entsprechenden Elements in Fahrtrichtung. Besonders bevorzugt ist es, dass dieser Abstand 10 bis 40 cm, insbesondere 20 bis 30 cm beträgt. Durch ein derartiges Anordnen der Scharnierelemente im hinteren Bereich des Behälterelements, jedoch nicht an der Rückwand des Behälterelements, ist es zuverlässig möglich, das Deckelement insbesondere vollständig öffnen zu können.

Erfindungsgemäß ist das Scharnierelement, insbesondere der Scharnierhebel des Scharnierelements derart ausgebildet, dass beim Öffnen des Deckelelements aus einem vollständig geschlossenen Zustand zunächst ein vertikales Bewegen, d.h. ein Anheben des Deckelelements erfolgt. Das Deckelelement wird somit zunächst beim Öffnen erst angehoben und dann verschwenkt. Bevorzugt ist es, dass die Schließbewegung in entgegengesetzter Richtung ebenso erfolgt, d.h. dass zunächst ein Schwenken des Deckelelements erfolgt, bis das Deckelelement im Wesentlichen parallel zu einer Oberseite des Behälterelements ist und sodann abgesenkt wird. Insbesondere erfolgt kurz vor dem Schließen des Deckels ein Ziehen bzw. Bewegen des Deckels nach unten derart, dass ein zuverlässiges und insbesondere dichtes Schließen gewährleistet ist. Eine derartige zusätzliche Schließkraft kann insbesondere durch die entsprechende Anordnung der zwischen den beiden Scharnierhebeln vorgesehenen Feder realisiert werden.

Somit bewegt sich das Deckelelement zum endgültigen Verschließen des Behälterelements im Wesentlichen senkrecht zur Oberseite des Behälterelements. Es findet somit in horizontaler Richtung zwischen dem Deckelelement und dem Behälterelement beim Verschließen im Wesentlichen keine Bewegung statt. Insofern treten hier auch keine Reibungen und mit der Reibung verbundener Verschleiß auf.

Besonders bevorzugt ist es hierbei, dass der Schließhebel in Seitenansicht abgewinkelt ausgebildet ist, insbesondere in Seitenansicht S-förmig bzw. Z-förmig ausgebildet ist. Der Schließhebel funktioniert hierdurch ähnlich eines Kniehebels. Hierbei ist es bevorzugt, dass im geschlossenen Zustand der Schwenkhebel ausgehend von der mit der Seitenwand verbundenen Schwenkachse zunächst in Richtung der Rückwand des Behälterelements verläuft und sodann in einem Winkel > 90° nach oben in Richtung des Deckelelements verläuft. In diesem Bereich verläuft der Schwenkhebel somit sowohl in Richtung der Rückwand bzw. Rückseite als auch in Richtung des Deckelelements. Nach einer weiteren Absenkung des Scharnierhebels verläuft der mit der am Deckelbefestigungselement vorgesehenen Schwenkachse verbundene Bereich des Schwenkhebels im Wesentlichen parallel zu dem ersten Bereich des Schwenkhebels.

Des Weiteren kann zwischen dem Deckelelement und dem Behälterelement ein Dichtelement vorgesehen sein. Es handelt sich hierbei insbesondere um ein umlaufendes Dichtelement. Dieses kann an einer entsprechenden Anlagefläche der Unterseite des Deckelelements vorgesehen sein.

Bei einer besonders bevorzugten Weiterbildung der Erfindung ist zwischen dem Deckelelement und dem Behälterelement ein Halteelement vorgesehen. Das Halteelement dient insbesondere dazu, das Deckelelement in einer Offenstellung zu halten. Bei dem Halteelement kann es sich um eine Feder, einen Elastomerkörper, ein Hydraulikelement oder dergleichen handeln. Besonders bevorzugt ist insbesondere aufgrund der Robustheit und Zuverlässigkeit das Vorsehen einer Spiralfeder aus Metall. Vorzugsweise ist das Halteelement mit dem Deckelbefestigungselement und/oder dem Wandbefestigungselement verbunden. Dies hat insbesondere den Vorteil, dass keine zusätzlichen Befestigungselemente für das Halteelement an dem Deckelelement und/oder dem Behälterelement vorgesehen sein müssen. In besonders bevorzugter Ausführungsform ist das Halteelement durch die zwischen den beiden Scharnierhebeln angeordnete Feder realisiert. Bevorzugt ist es bei der Befestigung des Halteelements an dem Deckelbefestigungselement und/oder dem Wandbefestigungselement, dass die Befestigung in einem Abstand zu der zugehörigen Schwenkachse erfolgt. Hierdurch kann insbesondere bei der Ausgestaltung des Schwenkhebels in abgewinkelter Form ein zuverlässiges Halten des Deckelelements in Offenstellung erfolgen. Besonders bevorzugt ist es, dass die Schwenkhebel derart ausgestaltet sind, dass in der vollständig geöffneten Position eine Endstellung erreicht wird. Insbesondere wird durch die Anordnung und Ausgestaltung der beiden Schwenkhebel ein gegenseitiges Blockieren bewirkt, so dass ein weiteres Öffnen nicht möglich ist. Zusätzlich oder alternativ könnte auch ein Anschlag, insbesondere ein Anschlagdämpfer vorgesehen sein. Dies ist insbesondere vorteilhaft, um metallische Geräusche und Beschädigungen, insbesondere bei einem zu schnellen Öffnen des Deckelelements, zu vermeiden.

Insbesondere um ein abgedämpftes Schließen des Deckelelements zu ermöglichen, ist es bevorzugt, dass ein Dämpfungselement zwischen dem Deckelelement und dem Behälterelement vorgesehen ist. Dieses ist vorzugsweise wiederum mit dem Deckelbefestigungselement und/oder dem Wandbefestigungselement verbunden, wobei es besonders bevorzugt ist, dass das Dämpfungselement in das Halteelement integriert ist. Des Weiteren hat die umlaufende Dichtung den Vorteil, dass diese beim Schließen des Deckels dämpfend wirkt.

Besonders bevorzugt ist es, dass die Verbindung der Scharnierelemente, insbesondere der Wandbefestigungselemente an einem Rahmenelement des Behälterelements bzw. des Lastenfahrradbehälters erfolgt. Es ist insbesondere vorteilhaft, wenn das Behälterelement aus Kunststoff hergestellt ist bzw. Kunststoffbauteile aufweist. Die Krafteinleitung erfolgt somit nicht in ein Kunststoffbauteil, sondern in ein beispielsweise als Metallrohrrahmen ausgebildetes Rahmenelement. Dieses ist vorzugsweise mit dem Rahmen des Lastenfahrrads verbunden. Das Rahmenelement kann insbesondere im oberen Bereich angeordnete Verbindungsbügel aufweisen. Vorzugsweise handelt es sich um zwei im Wesentlichen U-förmige Verbindungsbügel, die miteinander verbunden sind und gemäß einer Art Klammer den Lastenfahrradbehälter bzw. das Behälterelement des Lastenfahrradbehälters vollständig umschließen bzw. umgreifen. Ein derart ausgestalteter Lastenfahrradbehälter ist insbesondere in DE 20 2019 104 809 beschrieben. Wie insbesondere in diesem Gebrauchsmuster beschrieben, kann der Verbindungsbügel auch innerhalb des Lastenfahrradbehälters oder in Ausnehmungen oder Vertiefungen des Lastenfahrradbehälters angeordnet sein. Bevorzugt ist es, dass der Verbindungsbügel insbesondere in sich geschlossen ist und somit eine steife Rahmenkonstruktion ausbildet, die einerseits die Teile des Lastenfahrradbehälters zusammenhält und miteinander verbindet und andererseits eine Kraftaufnahme ermöglicht. Besonders bevorzugt ist daher, dass die Verbindung des Lastenfahrradbehälters mit dem Lastenfahrrad über die Verbindungselemente und nicht über die Kunststoffteile erfolgt. Hierdurch kann eine zuverlässige Verbindung gewährleistet werden.

Vorzugsweise weist der Verbindungsbügel zwei Bügelelemente auf, die beispielsweise über Schrauben, Rastelemente oder dergleichen miteinander verbunden sind. Die Verbindungsbügel sind vorzugsweise U-förmig ausgebildet und verlaufen an einer Seitenwand, wobei das Mittelteil des Bügels an einer Seitenwand verläuft und die beiden Ansätze im Bereich der Vorderwand und der Rückwand verlaufen. Die Verbindung der beiden Bügelelemente erfolgt im Bereich der Vorderwand und/oder der Rückwand, insbesondere in der Mitte dieser beiden Wände. Besonders bevorzugt ist es, dass die Verbindung im Bereich der Trennebene erfolgt.

Vorzugsweise sind die Bügel in einem oberen Bereich nahe einer Oberkante der Seitenwände der Rückwand und der Vorderwand angeordnet. Insbesondere beträgt der Abstand des Bügelelements zu der Oberkante weniger als 10 cm, insbesondere weniger als 5 cm. Des Weiteren ist es bevorzugt, dass der Verbindungsbügel in Ausnehmungen oder Öffnungen angeordnet ist, so dass dieser insbesondere gegenüber einer Außenseite des Lastenfahrradbehälters nicht vorsteht.

Des Weiteren ist es bevorzugt, dass mindestens ein, insbesondere zwei Verbindungsstreben zum Verbinden der einzelnen Kunststoffteile vorgesehen sind. Besonders bevorzugt ist es, dass zwei Verbindungsstreben vorgesehen sind, wobei eine Verbindungsstrebe durch eine Innenseite der Rückwand und die andere Verbindungsstrebe im Bereich einer Innenseite der Vorderwand angeordnet ist. Die beiden Verbindungsstreben können hierbei derart ausgebildet sein, dass diese zwischen den beiden einander gegenüberliegenden Seitenwänden angeordnet sind und in bzw. an den Seitenwänden fixiert sind. Bevorzugt ist es, dass die insbesondere zwei Verbindungsstreben an ihren Enden Ansätze aufweisen. Hierbei kann ein Ansatz als ein insbesondere fest mit der Strebe verbundener Kopf und der andere Ansatz als lösbarer Ansatz, z.B. als Mutter, ausgebildet sein. Insbesondere bei dieser Ausführungsform ist ein Verspannen der Strebe und somit der Kunststoffteile auf einfache Weise möglich. Die Ansätze sind hierbei vorzugsweise in nach außen offenen Vertiefungen der Seitenwände angeordnet. Diese Vertiefungen können mit einem Deckel verschlossen sein.

Insbesondere durch die Kombination eines umlaufenden Verbindungsbügels im oberen Bereich des Lastenfahrradbehälters und zwei Verbindungsstreben im unteren Bereich kann eine gute und stabile Verbindung des Lastenfahrradbehälters realisiert werden. Insbesondere kann auch die Krafteinleitung über die Verbindungselemente erfolgen, wobei es besonders bevorzugt ist, dass der Lastenfahrradbehälter mit dem Lastenfahrrad über die Verbindungselemente verbunden ist.

Des Weiteren ist es bevorzugt, dass das Deckelelement oder das Behälterelement Kunststoff aufweist, insbesondere aus Kunststoff hergestellt ist. Hierbei sind vorzugsweise die Scharnierelemente oder andere Anbau- oder Zusatzteile ggf. nicht aus Kunststoff hergestellt. Bevorzugt ist es, als Kunststoff einen Partikelschaum, insbesondere einen geschäumten Partikelschaum zu verwenden. Besonders bevorzugt ist die Verwendung von EPP (expandiertes Polypropylen).

Ferner weist das Deckelelement und/oder ggf. auch das Wandelement an Krafteinleitungsstellen, insbesondere in Befestigungsbereichen des Scharnierelements, Versteifungen auf. Die Versteifung kann durch gesonderte, beispielsweise innerhalb des Kunststoffelements angeordnete beispielsweise plattenförmige Elemente aus Metall, einem anderen Kunststoff oder dergleichen erfolgen. Ggf. kann eine Versteifung auch durch Verdickung des Deckelelements in dem entsprechenden Bereich erfolgen.

Ferner ist es möglich, an der Innen- und/oder Außenseite des Deckelelements Versteifungsrippen vorzusehen. Hierdurch kann die Steifigkeit des Deckelelements verbessert bzw. das Gewicht bei gleicher Steifigkeit verringert werden.

An der Innen- und/oder Außenseite können ferner Halteelemente, Aufbewahrungsfächer und dergleichen vorgesehen sein. Beispielsweise könnte an der Außenseite eine Art Reling zur Befestigung von Transportgütern vorgesehen sein. Zur Ausbildung von Aufbewahrungsfächern kann an der Innen- oder Außenseite ein Netz oder dergleichen vorgesehen sein. Ferner können insbesondere an der Außenseite Rinnen zum Ablauf von Regenwasser vorgesehen sein. Dies ist insbesondere an der Rückseite des Deckelelements bevorzugt, um zu verhindern, dass Regenwasser in Richtung des Fahrers gelangt.

Des Weiteren ist es bevorzugt, dass zwischen dem Deckelelement und dem Behälterelement ein Schloss angeordnet ist. Bevorzugt ist hierbei das Vorsehen eines Schnappschlosses, so dass beim Schließen des Deckelelements das Schloss automatisch einschnappt bzw. zugedrückt werden kann. Ein Schlüssel, eine Zahlenkombination oder dergleichen ist sodann nur zum Öffnen des Schlosses erforderlich. Bevorzugt ist es, dass das Schloss zwischen einer Oberseite der Vorderwand des Behälterelements und der Vorderseite des Deckelelements angeordnet ist.

Nachfolgend wird die Erfindung anhand einer bevorzugten Ausführungsform unter Bezugnahme auf die anliegenden Zeichnungen näher erläutert.

Es zeigen:
- Fig. 1: eine schematische Ansicht eines Lastenfahrrads mit Lastenaufnahmebehälter,
- Fig. 2: eine schematische perspektivische Ansicht einer bevorzugten Ausführungsform eines Lastenfahrradbehälters mit geöffnetem Deckel,
- Fig. 3: eine schematische Teilansicht des in Fig. 2 dargestellten Lastenfahrradbehälters mit geöffnetem Deckel,
- Fig. 4: eine schematische Teil-Schnittansicht des in Fig. 2 dargestellten Lastenfahrradbehälters mit Deckel und
- Fig. 5: eine der Fig. 4 entsprechende Teil-Schnittansicht mit geschlossenem Deckel.

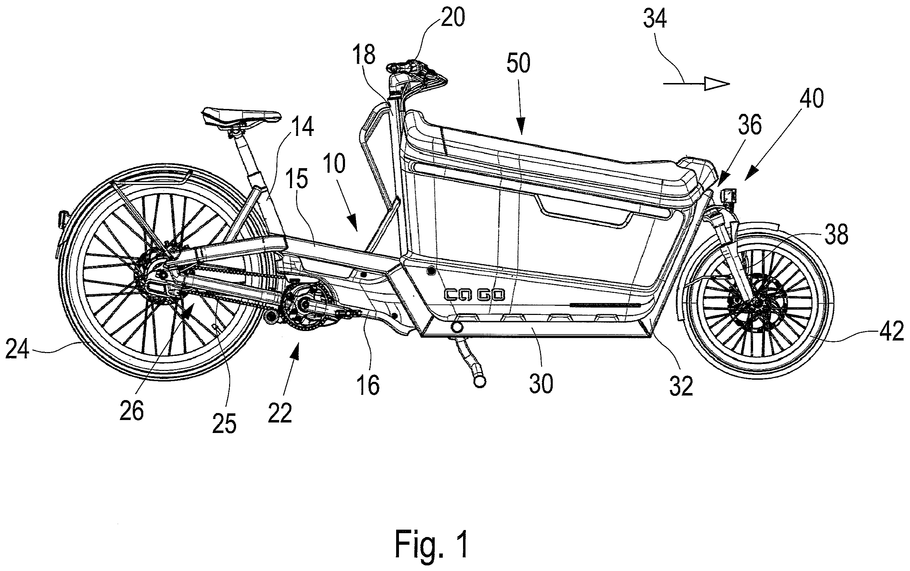

Eine bevorzugte Ausführungsform des erfindungsgemäßen Lastenfahrrads, wie in Figur 1 dargestellt, weist einen Lastenfahrrad-Rahmen 10 auf. Der Lastenfahrrad-Rahmen 10 weist im dargestellten Ausführungsbeispiel ein Sattelrohr 14, ein Oberrohr 15 und ein von einer Abdeckung verdecktes Unterrohr 16 sowie ein Lenkerrohr 18 auf. In dem Lenkerrohr 18 ist ein schwenkbares Rohr angeordnet, das mit einem Lenker 20 verbunden ist. Ferner ist zwischen dem Unterrohr 16 und dem Sattelrohr 14 im dargestellten Ausführungsbeispiel eine Antriebseinrichtung 22 angeordnet. Diese weist ein herkömmliches Tretlager auf, das mit einem Elektromotor verbunden ist, so dass das Treten von einem Elektromotor unterstützt werden kann. Der Antrieb eines Hinterrades 24 erfolgt über einen Antrieb mittels Zahnriemen 25 oder dergleichen. Ferner weist der Lastenfahrrad-Rahmen 10 einen Hinterbau 26 auf, der das Hinterrad 24 trägt. In dem dargestellten Ausführungsbeispiel ist ein einspuriges Lastenfahrrad dargestellt.

Ferner weist der Fahrradrahmen 10 ein Tragelement auf. Das Tragelement weist im dargestellten Ausführungsbeispiel zwei horizontale Rahmenelemente 30 (Fig. 1) auf, die mit dem Unterrohr 16 sowie dem Lenkerrohr 18 verbunden sind. Mit den beiden horizontal verlaufenden Rahmenelementen 30 sind zwei im dargestellten Ausführungsbeispiel in Fahrtrichtung 34 steigend verlaufende Gabelelemente 32 angeordnet. Diese sind im Bereich eines Gabelschafts 36 miteinander und mit diesem verbunden. Der Gabelschaft 36 ist Teil eines ferner auch die Gabel 38 umfassenden Gabelelements 40, welches im dargestellten Ausführungsbeispiel ein Vorderrad 42 trägt.

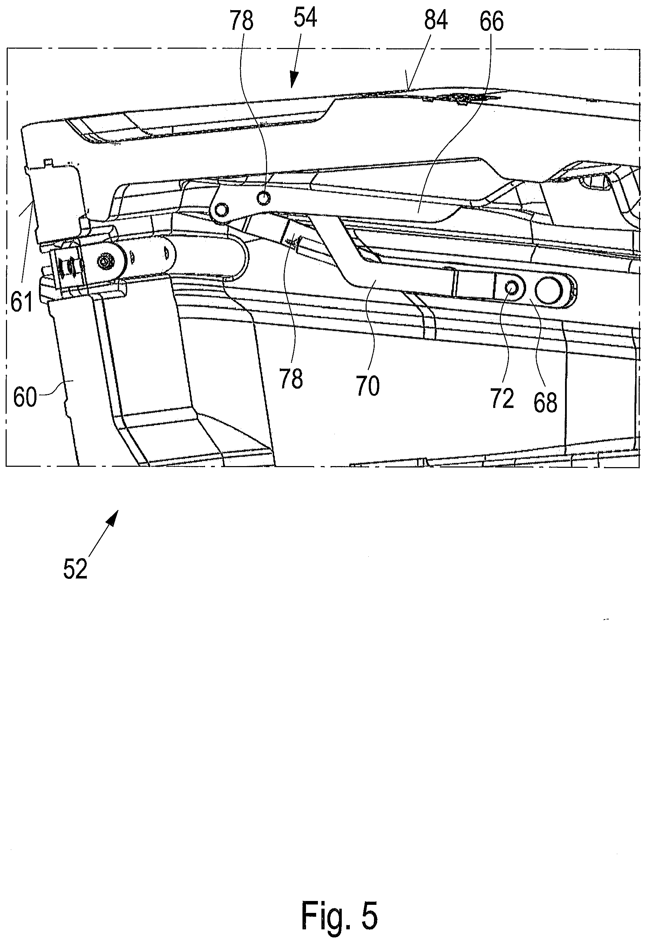

Ein Lastenfahrradbehälter 50 weist ein Behälterelement 52 sowie ein das Behälterelement 52 in geschlossenem Zustand (Fig. 5) vollständig verschließendes Deckelelement 54 auf.

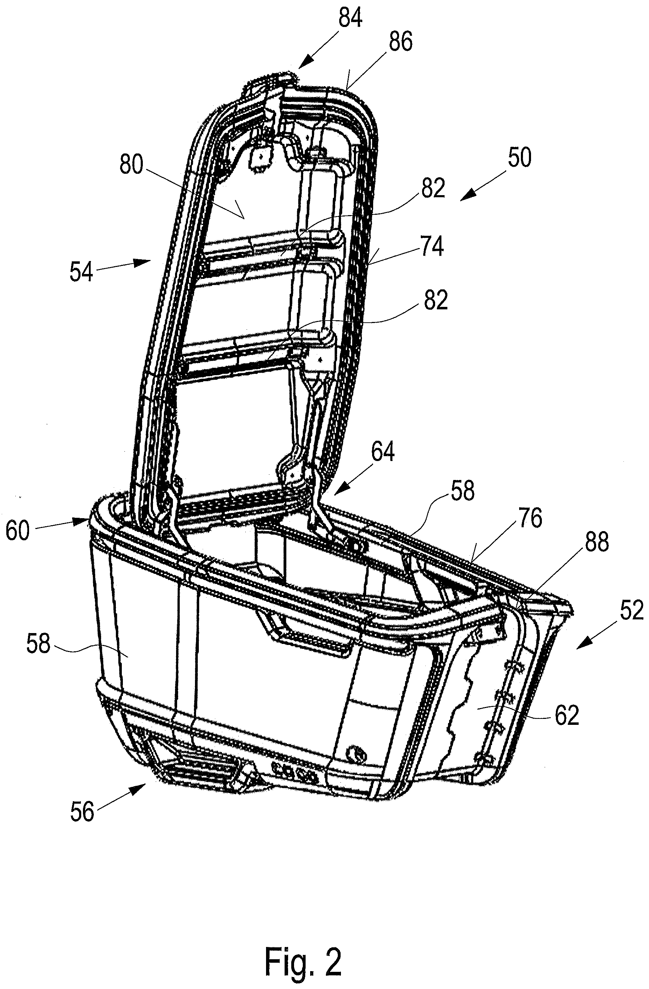

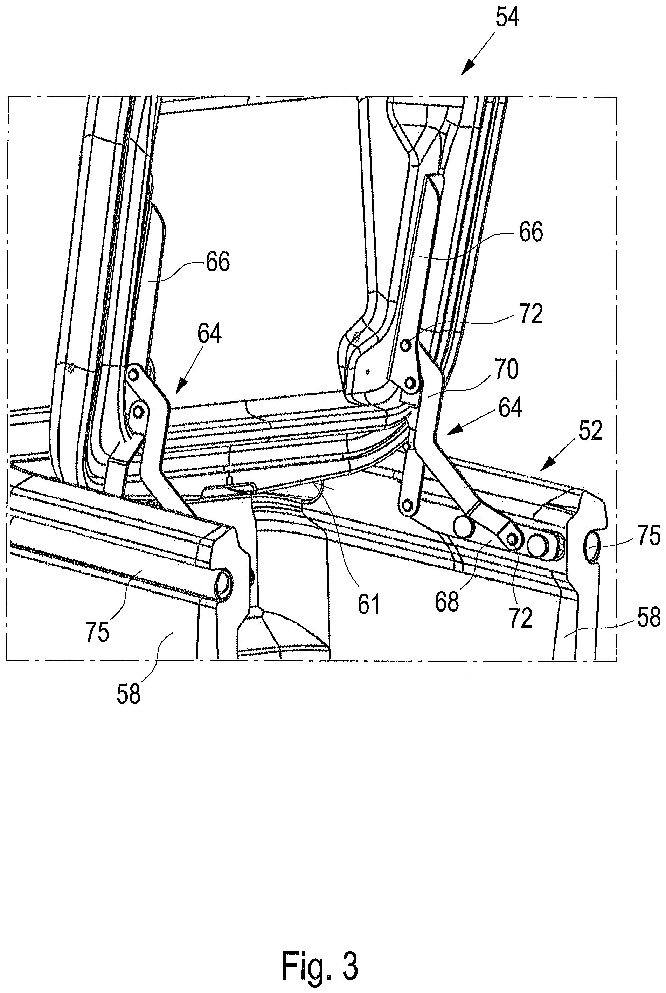

Das Behälterelement 52 ist im unteren Bereich, d.h. im Bereich des Schriftzugs, etwas unterschiedlich ausgebildet als das in Fig. 1 dargestellte Behälterelement. Das in den Figuren 2 bis 5 dargestellte Behälterelement 52 weist zusätzlich eine Trittöffnung 56 auf.

Das Behälterelement 52 weist zwei einander gegenüberliegende Seitenwände 58, eine Rückwand 60 und eine Vorderwand 62 auf. Ferner ist ein Bodenelement vorgesehen.

Das Deckelelement 54 ist über zwei Scharnierelemente 64 mit dem Behälterelement 52 verbunden. Die beiden Scharnierelemente 64 sind jeweils mit dem Deckelelement 54 und dem Behälterelement 52 in einem Abstand zur Rückwand 60, d.h. in Richtung der Vorderwand 62 versetzt verbunden. Die beiden Scharnierelemente 64 weisen jeweils ein Deckelbefestigungselement 66 sowie ein Wandbefestigungselement 68 auf. Das Deckelbefestigungselement 66 und das Wandbefestigungselement 68 sind jeweils über zwei Scharnierhebel 70, 78 miteinander verbunden. Der erste Scharnierhebel 70 ist über Schwenkachsen 72 mit dem Deckelbefestigungselement 66 bzw. dem Wandbefestigungselement 68 schwenkbar verbunden.

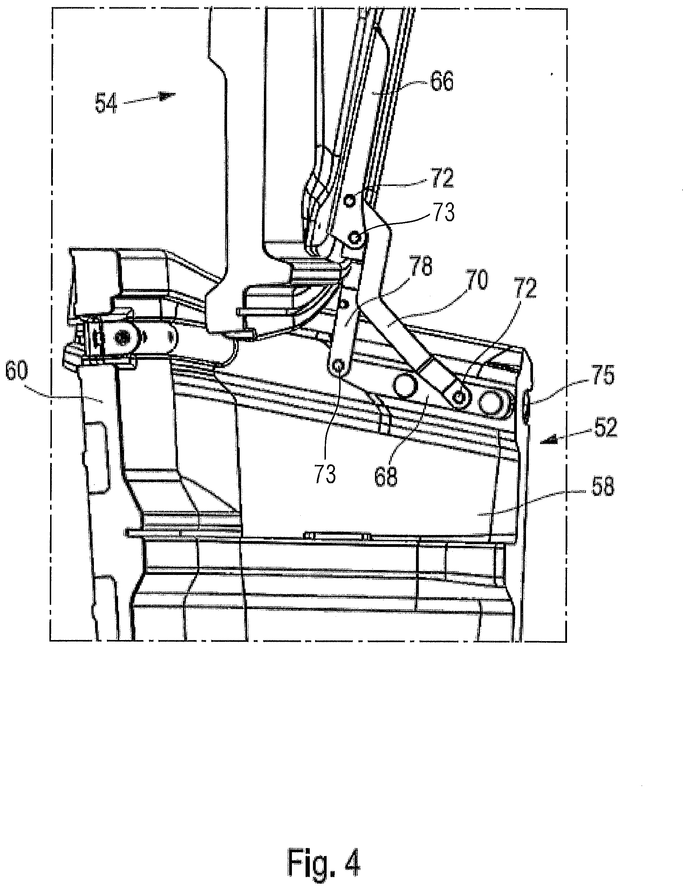

Der zweite Scharnierhebel 78 ist im dargestellten Ausführungsbeispiel mit dem Wandbefestigungselement 68 und dem Deckelbefestigungselement 66 jeweils wiederum über Schwenkachsen verbunden. Der zweite Scharnierhebel 78 ist im Wesentlichen gerade ausgestaltet und, bezogen auf den ersten Scharnierhebel 70, zwischen diesem und der Rückwand 60 des Behälterelements 52 angeordnet. Zwischen den beiden Scharnierhebeln 70, 78 ist ein in Fig. 4 nicht dargestelltes Federelement angeordnet. Dies kann an entsprechenden Pins oder Ansätzen der beiden Scharnierhebelelemente 70, 78 fixiert sein.

Der erste Scharnierhebel 70 ist in Draufsicht S- oder Z-förmig ausgebildet. Durch das Vorsehen und die entsprechende Ausgestaltung und Anordnung der beiden Scharnierhebel 70, 78 ist beim Schließen des Deckelelements 54 aus der in den Figuren 2 bis 4 dargestellten offenen Position in die geschlossene Position (Fig. 5) gewährleistet, dass das Deckelelement zunächst verschwenkt wird, bis eine Unterseite 74 des Deckelelements 54 im Wesentlichen parallel zu einer Oberseite 76 des Behälterelements 52 angeordnet ist. Erst danach erfolgt ein Absenken des Deckelelements 54, so dass das Behälterelement 52 verschlossen wird (Fig. 5). Zum dichten Verschließen kann an der Oberseite 74 und/oder 76 ein insbesondere umlaufendes Dichtelement vorgesehen sein.

Durch die entsprechende Ausgestaltung und Anordnung der beiden Scharnierhebel 70, 78 ist die bevorzugte Bewegung des Deckelelements 54 gewährleistet. Beim Öffnen erfolgt somit zunächst ein Anheben des Deckelelements 54, bevor dieses insbesondere in Richtung des Lenkers verschwenkt wird. Entsprechend erfolgt beim Schließen zunächst ein Verschwenken des Deckelelements, bis dieses im Wesentlichen parallel zu einer Oberseite des Behälterelements 52 angeordnet ist. Anschließend erfolgt ein Absenken des Deckelelements 54 und hierdurch ein Verschließen des Behälterelements 52.

Das Vorsehen des Dämpfungselements 78 dient ferner dazu, das Deckelelement 54 in seiner offenen Stellung zu halten.

Des Weiteren weist das Deckelelement 54 an einer Innenseite 80 im dargestellten Ausführungsbeispiel zwei Versteifungsrippen 82 auf. In diesem Bereich kann zusätzlich ein Netz zur Ausgestaltung von Staufächern oder dergleichen vorgesehen sein.

An einer Oberseite 84 (Fig. 5) des Deckelelements 54 können weitere Befestigungselemente wie eine Reling oder dergleichen vorgesehen sein. Ferner können Regenrinnen vorgesehen sein, um insbesondere zu vermeiden, dass Regenwasser auf der Oberseite 84 des Deckelelements 54 entgegen der Fahrtrichtung läuft.

Zusätzlich kann insbesondere an einer Vorderseite 86 des Deckelelements 54 ein Schloss 84 vorgesehen sein, das mit einem entsprechendem Element 88 des Schlosses zusammenwirkt, das an der Vorderwand 62 angeordnet ist.

Das Behälterelement 52 weist ein insbesondere umlaufendes Rahmenelement 75 auf. Hierbei handelt es sich um ein insbesondere aus einem Metallrohr hergestelltes Rahmenelement. Das Rahmenelement weist vorzugsweise Verbindungsbügel auf. Diese umschließen das Behälterelement 52 insbesondere nach Art einer Klammer. Die Wandbefestigungselemente 68 sind zur Verbesserung der Krafteinleitung nicht mit dem insbesondere aus Kunststoff hergestellten Behälterelement 52, sondern unmittelbar mit dem Rahmenelement 75 fest verbunden.

In der in den Figuren dargestellten bevorzugten Ausführungsform wird das Deckelelement 54 aus einer geschlossenen Stellung (Fig. 5) in eine offene Stellung (Fig. 4) derart verschwenkt, dass das Deckelelement 54 in der offenen Stellung innerhalb des Behälterelements 52 angeordnet ist. Das Deckelelement 54 ist somit, wie insbesondere aus Fig. 4 ersichtlich, bei dieser bevorzugten Ausführungsform innerhalb der Rückwand 60, d.h. oberhalb der Behälteröffnung angeordnet.

Ausgehend von dem geschlossenen Zustand (Fig. 5), in dem die Rückseite 61 des Deckelelements 54 oberhalb der Rückwand 60 angeordnet ist, erfolgt somit aufgrund der erfindungsgemäßen Ausgestaltung der beiden Scharnierelemente 64 zunächst ein geringfügiges Anheben des Deckelelements 54. Dies hat den erheblichen Vorteil, dass ein Dichtelement, das zwischen der Oberseite des Behälterelements 52 und der Unterseite des Deckelelements 54 angeordnet ist, im Wesentlichen nur durch Druckkräfte belastet wird. Nach dem geringfügigen Anheben des Deckelelements 54 beim Öffnen erfolgt ein Verschwenken in die in Fig. 4 dargestellte Offenstellung.

Eine derartige rotatorische und translatorische Bewegung des Deckelelements 54 beim Öffnen und Schließen ist insbesondere möglich, da die beiden Scharnierelemente 64 zwei Scharnierhebel 70, 78 aufweisen. Beide Scharnierhebel 70, 78 sind jeweils über Schwenkachsen 72, 73 mit dem Befestigungselement 66 bzw. 68 verbunden, wobei auch eine unmittelbare Verbindung mit dem Behälterelement 52 bzw. dem Deckelelement 54 möglich wäre. Die Schwenkachsen 72, 73 sind derart angeordnet, dass diese am Wandbefestigungselement 68 einen größeren Abstand zueinander aufweisen als am Deckelbefestigungselement 66. Des Weiteren ist es in der dargestellten Ausführungsform bevorzugt, dass der Abstand der Schwenkachsen 72 größer ist als der Abstand der Schwenkachsen 73.

Des Weiteren erfolgt beim Öffnen bzw. Schließen des Deckelelements stets eine Bewegung beider Scharnierhebel in die gleiche Drehrichtung. So bewegen sich die Scharnierhebel 70, 78 beim Öffnen in Fig. 4 gegen den Uhrzeigersinn, und beim Schließen bewegen sich beide Scharnierhebel 70, 78 im Uhrzeigersinn, bezogen auf die Darstellung in Fig. 4.

## Patentansprüche

1. Lastenfahrradbehälter mit
einem Behälterelement (52) mit zwei einander gegenüberliegenden Seitenwänden (58), einer Rückwand (60), einer Vorderwand (62) sowie einem Bodenelement, und
einem eine Öffnung des Behälterelements (52) vorzugsweise vollständig verschließenden Deckelelement (54), wobei
das Deckelelement (54) über zwei Scharnierelemente (64) jeweils mit einer der beiden Seitenwände (58) mittelbar oder unmittelbar verbunden ist,
wobei vorzugsweise die Scharnierelemente (64) derart ausgebildet sind, dass beim Öffnen und Schließen des Deckelelements (54) eine rotatorische und translatorische Bewegung des Deckelelements (54) gegenüber dem Behälterelement (52) erfolgt, so dass das Deckelelement (54) in geöffnetem Zustand oberhalb der Öffnung des Behälterelements (52) angeordnet ist, wobei beim Schließen des Scharnierelements (64) aus einer geöffneten Stellung zunächst ein Verschwenken des Deckelelements (54) erfolgt, bis das Deckelelement (54) im Wesentlichen parallel zu einer Oberseite (76) des Behälterelements (52) angeordnet ist, **dadurch gekennzeichnet, dass**
beim Öffnen des geschlossenen Deckelelements (54) zunächst zumindest ein im Wesentlichen vertikales Bewegen des Deckelelements (54) erfolgt.

2. Lastenfahrradbehälter nach Anspruch 1, **dadurch gekennzeichnet, dass** die Scharnierelemente (64) jeweils ein Deckelbefestigungselement (66) und ein Wandbefestigungselement (68) aufweisen, die jeweils in einem Abstand zur Rückwand (60) des Behälterelements (52) bzw. zur Rückseite (61) des Deckelelements (54) angeordnet sind.

3. Lastenfahrradbehälter nach Anspruch 2, **dadurch gekennzeichnet, dass** jeweils zwischen dem Deckelbefestigungselement (66) und dem Wandbefestigungselement (68) mindestens ein Scharnierhebel (70, 78) vorgesehen ist, der mit dem Deckelbefestigungselement (66) und dem Wandbefestigungselement (68) schwenkbar, insbesondere über jeweils eine Schwenkachse (72) verbunden ist.

4. Lastenfahrradbehälter nach Anspruch 3, **dadurch gekennzeichnet, dass** ein zweiter Scharnierhebel (78) zwischen dem Deckelbefestigungselement (66) und dem Wandbefestigungselement (68) vorgesehen ist und insbesondere mit dem Deckelbefestigungselement (66) und dem Wandbefestigungselement (68) jeweils schwenkbar verbunden ist.

5. Lastenfahrradbehälter nach Anspruch 3 oder 4, **dadurch gekennzeichnet, dass** zwischen den beiden Scharnierhebeln (70, 78) ein Federelement angeordnet ist.

6. Lastenfahrradbehälter nach einem der Ansprüche 2 bis 5, **dadurch gekennzeichnet, dass** der Abstand zwischen der Rückseite (61) und dem Deckelbefestigungselement (66) und/oder zwischen der Rückwand (60) und dem Wandbefestigungselement (68) mindestens ein Sechstel, insbesondere ein Viertel und besonders bevorzugt ein Drittel der Länge des Deckelelements (54) bzw. der Seitenwand (58) des Behälterelements (52) beträgt.

7. Lastenfahrradbehälter nach einem der Ansprüche 2 bis 6, **dadurch gekennzeichnet, dass** der Abstand 10 cm bis 40 cm, insbesondere 20 cm bis 30 cm beträgt.

8. Lastenfahrradbehälter nach einem der Ansprüche 2 bis 7, **dadurch gekennzeichnet, dass** der Abstand zwischen der Rückseite (61) bzw. der Rückwand (60) und den Schwenkachsen (72) gemessen ist.

9. Lastenfahrradbehälter nach einem der Ansprüche 1 bis 8, **dadurch gekennzeichnet, dass** sich zum endgültigen Schließen das Deckelelement (54) im Wesentlichen senkrecht zur Oberseite (76) des Behälterelements (52) bewegt.

10. Lastenfahrradbehälter nach einem der Ansprüche 2 bis 9, **dadurch gekennzeichnet, dass** das Schwenkelement (64), insbesondere der Schwenkhebel (70) derart ausgebildet ist, dass beim Schließen des Deckelelements (54) zunächst ein Verschwenken des Deckelelements (54) um die Schwenkachse (72) am Deckelbefestigungselement (66) erfolgt.

11. Lastenfahrradbehälter nach einem der Ansprüche 1 bis 10, **dadurch gekennzeichnet, dass** zwischen dem Deckelelement (54) und dem Behälterelement (52) insbesondere an der Oberseite (76) des Behälterelements (52) ein insbesondere umlaufendes Dichtelement vorgesehen ist.

12. Lastenfahrradbehälter nach einem der Ansprüche 1 bis 11, **dadurch gekennzeichnet, dass** zwischen dem Deckelelement (54) und dem Behälterelement (52) ein Halteelement (78) zum Halten des Deckelelements (54) in einer Offenstellung vorgesehen ist.

13. Lastenfahrradbehälter nach Anspruch 12, **dadurch gekennzeichnet, dass** das Halteelement (78) mit dem Deckelbefestigungselement (66) und/oder dem Wandbefestigungselement (68) verbunden ist.

14. Lastenfahrradbehälter nach Anspruch 12 oder 13, **dadurch gekennzeichnet, dass** das Befestigen des Halteelements (78) in einem Abstand zu der zugehörigen Schwenkachse (72) erfolgt.

15. Lastenfahrradbehälter nach einem der Ansprüche 1 bis 14, **dadurch gekennzeichnet, dass** zwischen dem Deckelelement (54) und dem Behälterelement (52) ein Dämpfungselement vorgesehen ist, das vorzugsweise in das Halteelement (78) integriert ist.

16. Lastenfahrradbehälter nach einem der Ansprüche 1 bis 15, **dadurch gekennzeichnet, dass** ein insbesondere umlaufendes Rahmenelement vorgesehen ist und das Schwenkelement (64), insbesondere das Wandbefestigungselement (68), an dem Rahmenelement befestigt ist.

17. Lastenfahrradbehälter nach einem der Ansprüche 1 bis 16, **dadurch gekennzeichnet, dass** das Deckelelement (54) und das Behälterelement (52) Kunststoff, insbesondere Partikelschaum und besonders bevorzugt EPP (expandiertes Polypropylen) aufweisen, insbesondere aus diesem Material hergestellt sind.

18. Lastenfahrradbehälter nach einem der Ansprüche 1 bis 17, **dadurch gekennzeichnet, dass** das Deckelelement (54) an Krafteinleitungsstellen, insbesondere in dem Befestigungsbereich des Scharnierelements, versteift ist.

19. Lastenfahrradbehälter nach einem der Ansprüche 1 bis 18, **dadurch gekennzeichnet, dass** das Befestigungselement an einer Innen- und/oder Außenseite Versteifungsrippen (82) aufweist.

20. Lastenfahrradbehälter nach einem der Ansprüche 1 bis 19, **dadurch gekennzeichnet, dass** zwischen dem Deckelelement (54) und dem Behälterelement (52) ein insbesondere als Schnappschloss ausgebildetes Schloss (84) vorgesehen ist, das vorzugsweise an einer Oberseite der Vorderwand (62) des Behälterelements (52) angeordnet ist.

## Claims

1. A cargo bike box comprising
a box element (52) having two opposite side walls (58), a rear wall (60), and a front wall (62) as well as a bottom element, and
a lid element (54) preferably completely closing an opening of the box element (52), wherein
the lid element (54) is directly or indirectly connected via two hinge elements (64) with respectively one of the two side wall (58),
wherein the hinge elements (64) are preferably configured such that when opening and closing the lid element (54), there is a rotational and translational movement of the lid element (54) with respect to the box element (52), so that the lid element (54) is arranged above the opening of the box element (52) in an opened state, wherein when closing the hinge element (64) from an opened position, the lid element (54) is initially pivoted until the lid element (54) is arranged substantially parallel to an upper side (76) of the box element (52),
**characterized in that**
when opening the closed lid element (54), the lid element (54) is first moved at least substantially vertically.

2. The cargo bike box according to claim 1, **characterized in that** the hinge elements (64) each have a lid fixing element (66) and a wall fixing element (68), each arranged at a distance from the rear wall (60) of the box element (52) and from the rear side (61) of the lid element (54), respectively.

3. The cargo bike box according to claim 2, **characterized in that** between each of the lid fixing element (66) and the wall fixing element (68) at least one hinge lever (70, 78) is provided that is pivotable with the lid fixing element (66) and the wall fixing element, in particular connected via respectively one pivot axis (72).

4. The cargo bike box according to claim 3, **characterized in that** a second hinge lever (78) is provided between the lid fixing element (66) and the wall fixing element (68) and in particular is pivotably connected to each of the lid fixing element (66) and the wall fixing element (68).

5. The cargo bike box according to claim 3 or 4, **characterized in that** a spring element is arranged between the two hinge levers (70, 78).

6. The cargo bike box according to any one of claims 2 to 5, **characterized in that** the distance between the rear side (61) and the lid fixing element (66) and/or between the rear wall (60) and the wall fixing element (68) is at least one sixth, in particular one quarter, and particularly preferred one third of the length of the lid element (54) or the side wall (58) of the box element (52).

7. The cargo bike box according to any one of claims 2 to 6, **characterized in that** the distance is 10 cm to 40 cm, in particular 20 cm to 30 cm.

8. The cargo bike box according to any one of claims 2 to 7, **characterized in that** the distance between the rear side (61) or the rear wall (60) and the pivot axis (72) is measured.

9. The cargo bike box according to any one of claims 1 to 8, **characterized in that** the lid element (54) moves substantially vertically to the upper side (76) of the box element (52) in order to completely close.

10. The cargo bike box according to any one of claims 2 to 9, **characterized in that** the pivot element (64), in particular the pivot lever (70) is configured such that when closing the lid element (54), the lid element (54) is first pivoted abound the pivot axis (72) on the lid fixing element (66).

11. The cargo bike box according to any one of claims 1 to 10, **characterized in that** an in particular circumferential sealing element is provided between the lid element (54) and the box element (52), in particular on the upper side (76) of the box element (52).

12. The cargo bike box according to any one of claims 1 to 11, **characterized in that** a retaining element (78) for retaining the lid element (54) in an open position is provided between the lid element (54) and the box element (52).

13. The cargo bike box according to claim 12, **characterized in that** the retaining element (78) is connected to the lid fixing element (66) and/or the wall fixing element (68).

14. The cargo bike box according to claim 12 or 13, **characterized in that** the retaining element (78) is fixed at a distance to the associated pivot axis (72).

15. The cargo bike box according to any one of claims 1 to 14, **characterized in that** a damping element is provided between the lid element (54) and the box element (52), which damping element is preferably integrated into the retaining element (78).

16. The cargo bike box according to any one of claims 1 to 15, **characterized in that** an in particular circumferential frame element is provided and fixes the pivot element (64), in particular the wall fixing element (68), to the frame element.

17. The cargo bike box according to any one of claims 1 to 16, **characterized in that** the lid element (54) and the box element (52) comprise plastic, in particular particle foam, and particularly preferred EPP (expanded polypropylene), are in particular made thereof.

18. The cargo bike box according to any one of claims 1 to 17, **characterized in that** the lid element (54) is stiffened at force application points, in particular in the fixing area of the hinge element.

19. The cargo bike box according to any one of claims 1 to 18, **characterized in that** the fixing element comprises stiffening rips (82) on an inner and/or outer side.

20. The cargo bike box according to any one of claims 1 to 19, **characterized in that** a lock, in particular formed as a snap lock, is provided between the lid element (54) and the box element (52), which lock is preferably arranged on an upper side of the front wall (62) of the box element (52).

## Revendications

1. Conteneur pour vélo cargo, comportant
un élément de conteneur (52) comportant deux parois latérales (58) opposées l'une à l'autre, une paroi arrière (60), une paroi avant (62) ainsi qu'un élément formant fond, et un élément de couvercle (54) fermant de préférence complètement une ouverture de l'élément de conteneur (52), dans lequel
l'élément de couvercle (54) est relié directement ou indirectement respectivement à l'une des deux parois latérales (58) par l'intermédiaire de deux éléments de charnière (64),
dans lequel les éléments de charnière (64) sont de préférence conçus de telle sorte que, lors de l'ouverture et de la fermeture de l'élément de couvercle (54), un déplacement de rotation et de translation de l'élément de couvercle (54) est effectué par rapport à l'élément de conteneur (52), de sorte que l'élément de couvercle (54), à l'état ouvert, est disposé au-dessus de l'ouverture de l'élément de conteneur (52), dans lequel, lors de la fermeture de l'élément de charnière (64) depuis une position ouverte, un pivotement de l'élément de couvercle (54) est d'abord effectué jusqu'à ce que l'élément de couvercle (54) soit disposé sensiblement parallèlement à un côté supérieur (76) de l'élément de conteneur (52), **caractérisé en ce que**, lors de l'ouverture de l'élément de couvercle (54) fermé, au moins un déplacement sensiblement vertical de l'élément de couvercle (54) est d'abord effectué.

2. Conteneur pour vélo cargo selon la revendication 1, **caractérisé en ce que** les éléments de charnière (64) présentent respectivement un élément de fixation pour couvercle (66) et un élément de fixation pour paroi (68) disposés respectivement à une certaine distance de la paroi arrière (60) de l'élément de conteneur (52) ou du côté arrière (61) de l'élément de couvercle (54).

3. Conteneur pour vélo cargo selon la revendication 2, **caractérisé en ce qu'**au moins un levier de charnière (70, 78) est prévu respectivement entre l'élément de fixation pour couvercle (66) et l'élément de fixation pour paroi (68), lequel levier de charnière est relié, en particulier par l'intermédiaire de respectivement un axe de pivotement (72), à l'élément de fixation pour couvercle (66) et à l'élément de fixation pour paroi (68) de manière à pouvoir pivoter.

4. Conteneur pour vélo cargo selon la revendication 3, **caractérisé en ce qu'**un second levier de charnière (78) est prévu entre l'élément de fixation pour couvercle (66) et l'élément de fixation pour paroi (68) et est en particulier relié à l'élément de fixation pour couvercle (66) et à l'élément de fixation pour paroi (68) respectivement de manière à pouvoir pivoter.

5. Conteneur pour vélo cargo selon la revendication 3 ou 4, **caractérisé en ce qu'**un élément élastique est disposé entre les deux leviers de charnière (70, 78).

6. Conteneur pour vélo cargo selon l'une des revendications 2 à 5, **caractérisé en ce que** la distance entre le côté arrière (61) et l'élément de fixation pour couvercle (66) et/ou entre la paroi arrière (60) et l'élément de fixation pour paroi (68) représente au moins un sixième, en particulier un quart et de manière particulièrement préférée un tiers de la longueur de l'élément de couvercle (54) ou de la paroi latérale (58) de l'élément de conteneur (52).

7. Conteneur pour vélo cargo selon l'une des revendications 2 à 6, **caractérisé en ce que** la distance va de 10 cm à 40 cm, en particulier de 20 cm à 30 cm.

8. Conteneur pour vélo cargo selon l'une des revendications 2 à 7, **caractérisé en ce que** la distance entre le côté arrière (61) ou la paroi arrière (60) et les axes de pivotement (72) est mesurée.

9. Conteneur pour vélo cargo selon l'une des revendications 1 à 8, **caractérisé en ce que**, pour la fermeture définitive, l'élément de couvercle (54) se déplace sensiblement perpendiculairement au côté supérieur (76) de l'élément de conteneur (52).

10. Conteneur pour vélo cargo selon l'une des revendications 2 à 9, **caractérisé en ce que** l'élément de pivotement (64), en particulier le levier pivotant (70), est conçu de telle sorte que, lors de la fermeture de l'élément de couvercle (54), un pivotement de l'élément de couvercle (54) est d'abord effectué autour de l'axe de pivotement (72) sur l'élément de fixation pour couvercle (66).

11. Conteneur pour vélo cargo selon l'une des revendications 1 à 10, **caractérisé en ce qu'**un élément d'étanchéité, en particulier circonférentiel, est prévu entre l'élément de couvercle (54) et l'élément de conteneur (52), en particulier sur le côté supérieur (76) de l'élément de conteneur (52).

12. Conteneur pour vélo cargo selon l'une des revendications 1 à 11, **caractérisé en ce qu'**un élément de retenue (78) est prévu entre l'élément de couvercle (54) et l'élément de conteneur (52) pour la retenue de l'élément de couvercle (54) dans une position ouverte.

13. Conteneur pour vélo cargo selon la revendication 12, **caractérisé en ce que** l'élément de retenue (78) est relié à l'élément de fixation pour couvercle (66) et/ou à l'élément de fixation pour paroi (68).

14. Conteneur pour vélo cargo selon la revendication 12 ou 13, **caractérisé en ce que** la fixation de l'élément de retenue (78) est effectuée à une certaine distance de l'axe de pivotement (72) associé.

15. Conteneur pour vélo cargo selon l'une des revendications 1 à 14, **caractérisé en ce qu'**un élément d'amortissement est prévu entre l'élément de couvercle (54) et l'élément de conteneur (52), lequel élément d'amortissement est de préférence intégré dans l'élément de retenue (78).

16. Conteneur pour vélo cargo selon l'une des revendications 1 à 15, **caractérisé en ce qu'**un élément formant cadre, en particulier circonférentiel, est prévu et l'élément pivotant (64), en particulier l'élément de fixation pour paroi (68), est fixé à l'élément formant cadre.

17. Conteneur pour vélo cargo selon l'une des revendications 1 à 16, **caractérisé en ce que** l'élément de couvercle (54) et l'élément de conteneur (52) présentent une matière plastique, en particulier une mousse à particules et de manière particulièrement préférée du PPE (polypropylène expansé), en particulier sont fabriqués à partir de ce matériau.

18. Conteneur pour vélo cargo selon l'une des revendications 1 à 17, **caractérisé en ce que** l'élément de couvercle (54) est rigidifié au niveau de points d'application de force, en particulier dans la zone de fixation de l'élément de charnière.

19. Conteneur pour vélo cargo selon l'une des revendications 1 à 18, **caractérisé en ce que** l'élément de fixation présente des nervures de renforcement (82) sur un côté intérieur et/ou extérieur.

20. Conteneur pour vélo cargo selon l'une des revendications 1 à 19, **caractérisé en ce qu'**une serrure (84), conçue en particulier comme une serrure à ressort, est prévue entre l'élément de couvercle (54) et l'élément de conteneur (52), laquelle serrure est de préférence disposée sur un côté supérieur de la paroi avant (62) de l'élément de conteneur (52).
